# EUROPEAN PATENT APPLICATION

(11) **EP 1 108 497 A2**
(43) Date of publication of application: **20.06.2001**
(21) Application number: 00126479.5
(22) Date of filing: 07.12.2000
(51) Int. Cl.: B23Q 1/70, B23Q 5/04, B23Q 1/26, F16C 35/12, F16C 23/06

(54) **Spindle unit**

(30) Priority: 14.12.1999 JP 35382399
(71) Applicant: Mori Seiki Co., Ltd., Yamatokoriyama-shi, Nara 639-1160 (JP)
(72) Inventor: Watanabe, Michio, Yamatokoriyama-shi, Nara, 639-1160 (JP); Nakai, Masateru, Yamatokoriyama-shi, Nara, 639-1160 (JP); Yamamoto, Tatsuya, Yamatokoriyama-shi, Nara, 639-1160 (JP)
(74) Representative: Reinhard - Skuhra - Weise & Partner

(57) **Abstract**

A spindle unit (1) comprises a plurality of rolling bearings (5a, 5b) which support a spindle (2), housings (3, 4) provided around the rolling bearings (5a, 5b) for supporting same, and a sliding sleeve (11) for pre-load change which freely slides in an axial direction of the housing (4) between at least one (5b) of the rolling bearings (5a, 5b) and the housing (4) and is provided to press an outer ring (6b) of the rolling bearing (5b), wherein a pre-load of the rolling bearings (5a, 5b) is changed in accordance with a rotational speed of the spindle (2). And the spindle unit (1) is characterized in that a static pressure operation portion (22) in the shape of an annular groove is formed between the housing (4) and the sliding sleeve (11), and a fluid pressure providing means (24) is provided to supply fluid pressure to the static pressure operation portion (22), whereby the sliding sleeve (11) slides at least when the pre-load is changed with keeping such a condition that fluid pressure has operated on the static pressure operation portion (22).

## Description

### BACKGROUND OF THE INVENTION

### Field of the Invention

The present invention relates to a spindle unit of a machine tool whose spindle is rotatably supported by rolling bearings and more particularly to a spindle unit provided such that a pre-load applied to the rolling bearings can be changed on the basis of a rotational speed of the spindle.

### Description of the Prior Art

A pre-load is usually applied to rolling bearings of a spindle unit used for a general machine tool for heightening precision in a rotation of a spindle. Usually, the pre-load is changed on the basis of a rotational speed of the spindle. This is because it is preferable that a greater pre-load should be applied to the rolling bearings to heighten precision in the rotation of the spindle when the spindle rotates at a low speed, on the other hand, there is a danger of seizure of the rolling bearings because of frictional heat in case that a much greater pre-load is applied when the spindle rotates at a high speed. Therefore, the rotational speed of the spindle has been usually classified into three speed ranges such as a low speed range, a middle speed range, and a high speed range, wherein the pre-load is changed to heavy, middle, and light on the basis of respective speed range.

As a spindle unit wherein a changing of a pre-load has been enabled, an invention disclosed in Japanese Unexamined Patent Application Publication No. 06-262485 (1994) has been well known. In this spindle unit, a sliding sleeve is interposed between rolling bearings which rotatably support a spindle and a housing, wherein the sliding sleeve is provided such that it freely slides in an axial direction of the housing, wherein a low-pressure hydraulic chamber to which low hydraulic pressure is supplied and a high-pressure hydraulic chamber to which high hydraulic pressure is supplied are formed between the spindle and the housing, wherein low hydraulic pressure or high hydraulic pressure is selectively supplied to the low-pressure hydraulic chamber or to the high-pressure hydraulic chamber so as to make the sliding sleeve slide in the axial direction for pressing outer rings of the rolling bearings in the axial direction, whereby the pre-load applied to the rolling bearings can be changed on the basis of hydraulic pressure.

Here, in the spindle unit disclosed in Japanese Unexamined Patent Application Publication No. 06-262485 (1994), for appropriately changing the pre-load applied to the rolling bearings, it is necessary that the sliding sleeve smoothly slides owing to hydraulic pressure and an operation force of hydraulic pressure is securely transmitted to the outer rings of the rolling bearings for pressing same in the axial direction.

However, in such a case that a fitting of the housing and the sliding sleeve is strictly defined, a resistance against slide therebetween becomes large, therefore a smooth movement of the sliding sleeve cannot be assured, consequently causing a fluctuation in a press force operating on the outer rings of the rolling bearings because of the resistance against slide. On the other hand, in such a case that a fitting of the housing and the sliding sleeve is loosely defined, a looseness occurs therebetween, therefore there is a fluctuation in the resistance against slide because the sliding sleeve displaces within the housing, consequently causing a fluctuation in the press force operating on the outer rings as described above. Thus, in this spindle unit, there has been a problem such that an appropriate changing of the pre-load cannot be assured because of the resistance against slide between the sliding sleeve and the housing.

In view of the foregoing, it is an object of the invention to provide a spindle unit which can ease the resistance against slide between the sliding sleeve and the housing and enables a smooth movement of the sliding sleeve and assures an appropriate changing of the pre-load applied to the rolling bearings.

### SUMMARY OF THE INVENTION

In accordance with the invention for achieving the above object, a spindle unit includes a plurality of rolling bearings for supporting a spindle, a housing which is provided around the rolling bearings, and a sliding sleeve for pre-load change which is provided so as to freely slide in an axial direction of the housing between at least one of the rolling bearings and the housing for pressing outer rings of the rolling bearings in the axial direction, wherein the pre-load of the rolling bearings can be changed on the basis of a rotational speed of the spindle, wherein a static pressure operation portion in the shape of an annular groove is formed between the housing and the sliding sleeve, wherein a fluid pressure providing means is provided so as to supply fluid pressure to the static pressure operation portion, whereby the sliding sleeve slides at least when the pre-load is changed with keeping such a condition that fluid pressure has operated on the static pressure operation portion.

According to the invention, the sliding sleeve is supported by pressed fluid supplied to the exterior thereof because the static pressure operation portion on which fluid pressure operates is formed between the housing and the sliding sleeve, whereby a displacement of the sliding sleeve within the housing can be prevented and a centripetal force of the sliding sleeve is heightened, consequently a resistance against slide between the housing and the sliding sleeve can be eased. The sliding sleeve slides with keeping such a condition that fluid pressure has operated on the static pressure operation portion at least when the pre-load is changed, whereby the sliding sleeve can slide with the resistance against slide having been eased, therefore the operation force of fluid pressure is securely transmitted to the outer rings of the rolling bearings, as a result an appropriate pre-load can be applied to the rolling bearings.

### BRIEF DESCRIPTION OF THE DRAWINGS

Fig. 1 is a cross-sectional view showing main components of a spindle unit according to one embodiment of the invention.

Fig. 2 is an expanded sectional view showing an expanded part of Fig. 1.

### DETAILED DESCRIPTION OF THE INVENTION

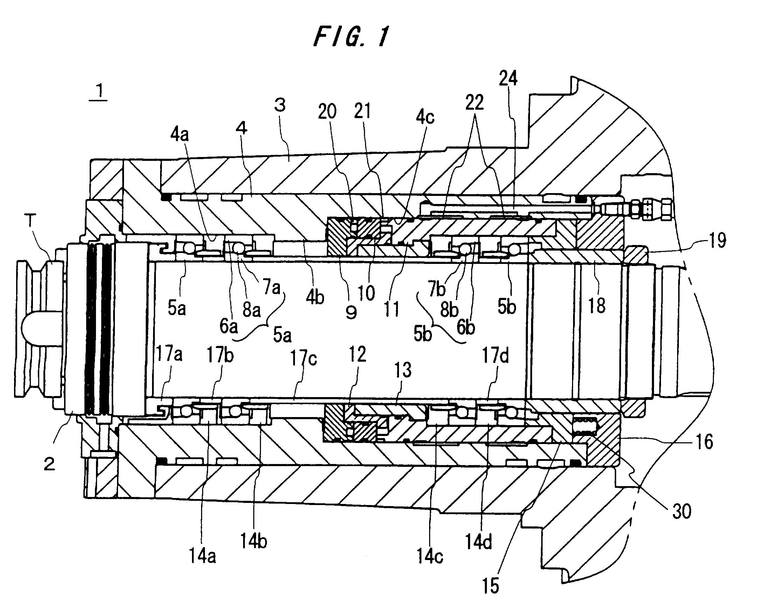

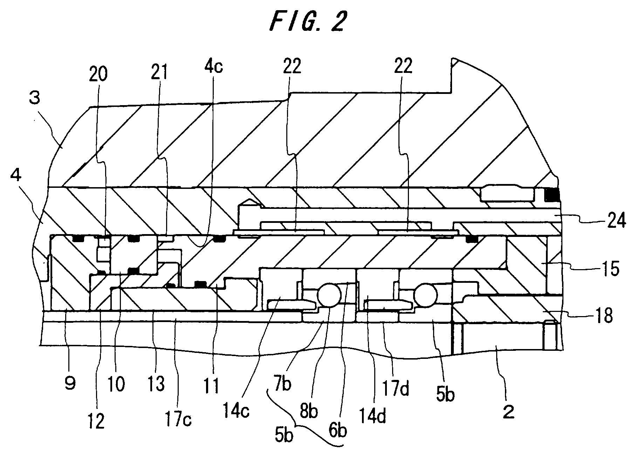

Now, a specific embodiment of the invention will hereinbelow be described with reference to the accompanying drawings. Fig. 1 is a cross-sectional view showing main components of a spindle unit in accordance with the embodiment of the invention. Fig. 2 is an expanded sectional view showing an expanded part of Fig. 1.

As shown, a spindle unit 1 of the embodiment includes a spindle 2 to which a tool T is attached, an inner housing 4 within which the spindle 2 is accommodated, an outer housing 3 into which the inner housing 4 is inserted and fitted thereto, a front bearing 5a and a rear bearing 5b which are both arranged within the inner housing 4 and rotatably support the spindle 2, and a sliding sleeve 11 which is provided between the rear bearing 5b and the inner housing 4. Here, the spindle 2 rotates by driving a spindle motor (not shown) and is changed in rotational speed to three ranges such as a low speed range, a middle speed range, and a high speed range owing to a speed change gear (not shown) . The front bearing 5a and the rear bearing 5b are respectively formed of an angular contact ball bearing including outer rings 6a and 6b, inner rings 7a and 7b, and rolling elements 8a and 8b.

In the interior of the inner housing 4, an inner diameter of a middle portion 4b seen in an axial direction of the inner housing is defined smallest. Further, an inner diameter of a front portion 4a of the inner housing is larger than the middle portion 4b, and an inner diameter of a rear portion 4c of the inner housing is larger than the front portion 4a. Here, the front portion 4a is provided with the front bearing 5a, and the rear portion 4c is provided with the rear bearing 5b. The sliding sleeve 11 is provided between the rear portion 4c of the inner housing 4 and the rear bearing 5b, provided to freely slide along the axial direction of the inner housing 4.

The interior of the sliding sleeve 11 is stepshaped so that a diameter of a rear side thereof is defined large, wherein an outer spacer 14c is provided between an inner end at the large diameter side and the rear bearing 5b, wherein an outer spacer 14d and an inner spacer 17d are respectively provided between the rear bearings 5b, 5b. Ring-shaped elements 9, 10 are provided between an inner end at the rear portion 4c side of the inner housing 4 and the sliding sleeve 11. A sleeve 13 is provided between the sliding sleeve 11 and the spindle 2. A sleeve 12 is provided between the sleeve 13 and the ring-shaped element 10.

An outer spacer 14b is provided between an inner end at the front portion 4a side of the inner housing 4 and the front bearing 5a. An outer spacer 14a and an inner spacer 17b are respectively provided between the front bearings 5a, 5a. A spacer 17a is provided between an end of the spindle 2 and the front bearing 5a. An inner spacer 17c is provided between the front bearing 5a and the rear bearing 5b. A sleeve 18 which is outer-fitted to the spindle 2 is provided at a rear side of the rear bearing 5b, and a nut 19 which is screwed into a screw portion formed in the spindle 2 is provided to the rear side. Thus, by screwing the nut 19 into the screw portion, the front bearing 5a and the rear bearing 5b are gathered near the middle portion 4b of the inner housing 4, wherein the front bearing 5a is held between the end of the spindle 2 and the middle portion 4b, wherein the rear bearing 5b is held between the middle portion 4b and the nut 19, thus, a specified pre-load is applied to the front bearing 5a and the rear bearing 5b. Here, the pre-load is defined when the spindle 2 rotated at a speed in the high speed range. The sliding sleeve 11 and the rear side of the rear bearing 5b are sealed by the ring-shaped elements 15, 16. The sliding sleeve 11 can slide in the axial direction thereof by a minute amount.

First hydraulic chamber 20 is formed between the ring-shaped elements 9 and 10. Second hydraulic chamber 21 is formed between the ring-shaped element 10 and the sliding sleeve 11. In the first hydraulic chamber 20 and the second hydraulic chamber 21, hydraulic pressure is supplied from a hydraulic pressure providing means (not shown) through a hydraulic line (not shown) which is formed within the inner housing 4. Therefore, low hydraulic pressure is supplied to the first hydraulic chamber 20, while high hydraulic pressure is supplied to the second hydraulic chamber 21. Thus, when hydraulic pressure is respectively supplied to the first hydraulic chamber 20 and the second hydraulic chamber 21, the sliding sleeve 11 is pressed toward the rear side thereof then slides in the axial direction thereof by the minute amount, whereby the pre-load applied to the rear bearing 5b increases. In addition, a press force by the sliding sleeve 11 is transmitted to the spindle 2 through the sleeve 18 and the nut 19, whereby the pre-load of the front bearing 5a held between the end of the spindle 2 and the middle portion 4b of the inner housing 4 increases.

Low hydraulic pressure supplied to the first hydraulic chamber 20 is to apply an appropriate pre-load in accordance with the middle speed range of the rotation of the spindle 2 to the front bearing 5a and the rear bearing 5b. On the other hand, high hydraulic pressure supplied to the second hydraulic chamber 21 is to apply an appropriate pre-load in accordance with the low speed range of the rotation of the spindle 2 to the front bearing 5a and the rear bearing 5b. Therefore, the lowest pre-load (a light pre-load) is applied to the front bearing 5a and the rear bearing 5b when hydraulic pressure is supplied neither to the first hydraulic chamber 20 nor the second hydraulic chamber 21, while a middle pre-load is applied thereto when hydraulic pressure is supplied to the first hydraulic chamber 20, while the highest pre-load (a heavy pre-load) is applied thereto when hydraulic pressure is supplied to the second hydraulic chamber 21. Here, the supply of hydraulic pressure to the first hydraulic chamber 20 and the second hydraulic chamber 21 is appropriately controlled by a control means (not shown), whereby hydraulic pressure is supplied neither to the first hydraulic chamber 20 nor the second hydraulic chamber 21 under the control of the control means (not shown) in case that the spindle 2 rotates at the high speed range, while hydraulic pressure is supplied to the first hydraulic chamber 20 in case that the spindle 2 rotates at the middle speed range, while hydraulic pressure is supplied to the second hydraulic chamber 21 in case that the spindle 2 rotates at the low speed range.

An annular groove 22 having a shallow bottom is circumferencially provided to the interior of the inner housing 4 in correspondence with the sliding sleeve 11, whereby specified hydraulic pressure is appropriately supplied to the annular groove 22 from the hydraulic pressure providing means through a hydraulic line 24 which is formed within the inner housing 4. When hydraulic pressure is supplied to the annular groove 22, the sliding sleeve 11 keeps such a condition that it has been supported in a radial direction thereof owing to static pressure, wherein the center of the sliding sleeve 11 is self-aligned so as to correspond with the center of the inner housing 4 owing to a centripetal force of the sliding sleeve 11. That is, the annular groove 22 functions as a static pressure operation portion. Thus, an appropriate gap is generated between the large-diameter portion 4c of the inner housing 4 and the exterior of the sliding sleeve 11, whereby a resistance against slide which generates when the sliding sleeve 11 slides can be decreased.

In the spindle unit 1 including above-mentioned components in accordance with the embodiment, the light pre-load is applied to the front bearing 5a and the rear bearing 5b when the spindle 2 rotates at the high speed range, while the middle pre-load is applied to the front bearing 5a and the rear bearing 5b when the spindle 2 rotates at the middle speed range because hydraulic pressure is supplied to the first hydraulic chamber 20, while the heavy pre-load is applied to the front bearing 5a and the rear bearing 5b when the spindle 2 rotates at the low speed range because hydraulic pressure is supplied to the second hydraulic chamber 21. As mentioned above, the appropriate pre-load is applied to the front bearing 5a and the rear bearing 5b in accordance with the rotational speed of the spindle 2, therefore precision in the rotation of the spindle 2 can be optimized.

In addition, in the spindle unit 1 in accordance with the embodiment, hydraulic pressure is supplied to the annular groove 22 at least when the pre-load applied to the front bearing 5a and the rear bearing 5b is changed, thus, the sliding sleeve 11 is supported by static pressure. Therefore, the center of the sliding sleeve 11 is self-aligned so as to correspond with the center of the inner housing 4, whereby the resistance against slide which generates when the sliding sleeve 11 slides can be decreased. Therefore, the sliding sleeve 11 slides with keeping such a condition that the resistance against slide has been eased when hydraulic pressure is supplied to the first hydraulic chamber 20 or the second hydraulic chamber 21, whereby the operation force of hydraulic pressure can be securely transmitted to the rear bearing 5b, consequently the appropriate pre-load (the middle pre-load or the heavy pre-load) can be applied to the front bearing 5a and the rear bearing 5b. On the other hand, when hydraulic pressure is stopped to be supplied to the first hydraulic chamber 20 and the second hydraulic chamber 21, the sliding sleeve 11 can be retrieved without any resistance to a condition before the supply of hydraulic pressure owing to a force of a spring 30. That is, a condition such that the sliding sleeve 11 has pressed the rear bearing 5b can be securely released, whereby the appropriate light pre-load can be applied the front bearing 5a and the rear bearing 5b.

## Claims

1. In a spindle unit (1) comprising:
a plurality of rolling bearings (5a, 5b)which support a spindle (2),
housings (3, 4) provided around the rolling bearings (5a, 5b) for supporting same, and
a sliding sleeve (11) for pre-load change which freely slides in an axial direction of the housing (4) between at least one (5b) of the rolling bearings (5a, 5b) and the housing (4) and is provided to press an outer ring (6b) of the rolling bearing (5b), wherein a pre-load of the rolling bearings (5a, 5b) is changed in accordance with a rotational speed of the spindle (2), the spindle unit (1) is characterized in that a static pressure operation portion (22) in the shape of an annular groove is formed between the housing (4) and the sliding sleeve (11), and a fluid pressure providing means (24) is provided to supply fluid pressure to the static pressure operation portion (22), whereby the sliding sleeve (11) slides at least when the pre-load is changed with keeping such a condition that fluid pressure has operated on the static pressure operation portion(22).
